# EUROPEAN PATENT SPECIFICATION

(11) **EP 3 789 692 B1**
(45) Date of publication and mention of the grant of the patent: **18.02.2026**
(21) Application number: 19195306.6
(22) Date of filing: 04.09.2019
(51) Int. Cl.: F24H 3/04, F24H 9/1863, B60H 1/22, H05B 3/22

(54) **HEATING ELEMENT, HEATING ASSEMBLY AND MOTOR VEHICLE**
HEIZELEMENT, HEIZVORRICHTUNG UND KRAFTFAHRZEUG
ÉLÉMENT DE CHAUFFAGE, ENSEMBLE DE CHAUFFAGE ET VÉHICULE À MOTEUR

(43) Date of publication of application: 10.03.2021
(73) Proprietor: Mahle International GmbH, 70376 Stuttgart (DE)
(72) Inventor: FUNK, Lena, 76133 Karlsruhe (DE); SEEWALD, Wolfgang, 71732 Tamm (DE); VAN HAAREN, Stéphane, 57370 Vilsberg (FR); VIEHRIG, Falk, 70469 Stuttgart (DE)
(74) Representative: BRP Renaud & Partner mbB Rechtsanwälte Patentanwälte Steuerberater

(56) References cited:
- EP-A1- 2 211 589
- EP-A1- 2 734 007
- EP-A1- 3 101 999
- DE-A1- 102011 077 922
- DE-A1- 102015 203 665

## Description

The invention relates to a heating element according to the preamble of Claim 1. The invention also relates to a heating assembly with at least one such heating element and also to a motor vehicle with at least one air-conditioning device with such a heating element.

A heating assembly for a motor vehicle, in particular an electrically drivable road motor vehicle or preferably a hybrid road motor vehicle, in particular a battery-operated vehicle, usually has a number of PTC heating elements (PTC: Positive Temperature Coefficient) made up of one or more heating bodies (also PTC thermistors) comprising ceramic PTC resistors. By means of the PTC heating elements, a fluid, in particular interior air or a temperature control fluid, can be heated as desired. Particularly at the heating bodies, it is intended that their electrical resistance changes in dependence on the temperature. As a result, a temperature that varies only little is obtained at the heating bodies independently of the prescribed boundary conditions, such as for example operating voltage or nominal resistance.

In particular in the case of electrically drivable road motor vehicles or preferably hybrid road motor vehicles, a heating assembly or a PTC heating element may be fed by the traction storage battery or an additional storage battery used there primarily for drive propulsion. Operating voltages which are provided at the heating assembly or at the PTC heating element in this case usually lie in a voltage range of between 150 V and 400 V. In future, even voltages of up to 800 V will be required. Because of the relatively high operating voltages, however, extensive electrical insulation of the heating assembly and/or the PTC heating elements from one another is required, in order to avoid short-circuits and in order to protect occupants of the motor vehicle. For this purpose, it is often necessary to make all of the electrically conducting and externally exposed elements of the heating assembly or the PTC heating elements potential-free and/or to maintain a minimum constructional gap between individual PTC heating elements, which is intended to prevent a short-circuit between these elements. These are technically also referred to as air gaps or creepage distances, which are to be provided between the PTC heating elements. These minimum distances may be up to 4 mm or more, so that a heating assembly equipped with PTC heating elements is relatively large. In keeping with the times, it is desirable also to optimize heating assemblies equipped with PTC heating elements; in particular, there is a desire to create and provide a relatively compact heating assembly, for example in order to be able to satisfy today's relatively demanding vehicle package requirements.

DE 20 2011 110 647 U1 describes an electrical vehicle heating device which has plate-shaped PTC heating elements, which are in each case made up of a number of layers connected to one another with a material-bonding effect. In order to keep the air gaps and creepage distances relatively small, it is intended to provide the PTC heating elements additionally with insulating bodies, the insulating bodies being arranged with a material-bonding effect on electrically conductive functional bodies for the electrical contacting of the heating elements. Further heating elements are described in EP 2 734 007 A1.

Relatively good electrical insulation with respect to the outside is provided by the known insulating bodies. However, the connection of the functional bodies to the insulating structures is inadequate, in particular against the background of increasing operating voltages, because for example the fatigue strength is reduced due to different coefficients of linear expansion of the materials paired or parts joined together.

The object of the invention is therefore to provide an improved or at least a different embodiment of a heating element and a heating assembly equipped with it.

In the case of the present invention, this object is achieved in particular by the subjects of the independent claims. Advantageous embodiments are the subject of the dependent claims and the description.

The basic idea of the invention is that of providing a functional separation, to be specific meeting the requirements demanded of the known functional bodies better than before, in that the functional bodies are divided on the basis of their functions into different functional body parts. This has the advantage that the individual functional body parts of the functional body in each case only have to perform a single function or a group of selected functions. This makes it possible to adapt functional body parts specifically to the respective functions. In the present case, it can therefore also be stated that the known functional bodies are optimized by functional separation.

Provided for this purpose is a heating element, in particular a PTC heating element, for heating a fluid, preferably air or temperature control fluid, which is preferably used on an electrically drivable motor vehicle. Specifically, the heating element has a heating body for converting electrical energy into thermal energy. Such heating bodies, in particular PTC heating bodies, may be operated in particular by means of an operating voltage, in particular DC voltage, of 400 V. For example, the operating voltage is provided at the heating element or on the heating body by means of a voltage supply system provided in the vehicle. The voltage supply system is for its part preferably fed by a traction storage battery. Furthermore, the heating body or the entire heating element may be designed in the form of a plate. This may mean that the heating body or the entire heating element defines two main directions of extent and a narrow direction of extent oriented transversely thereto, the heating body or the heating element always extending less far in the direction of the narrow direction of extent than in the direction of the two main directions of extent or than at least in the direction of a single main direction of extent. Furthermore, the heating body may be produced from a ceramic material. In any event, the heating body has two large heating areas oriented opposite one another. The term "large area" means in this connection that the heating body may have a peripheral side area bounding it, which connects the large areas to one another, the side area being designed to have a smaller surface area than the large areas. Preferably, the large heating areas are formed parallel or substantially parallel to one another. The heating element also has at least one insulating body for electrical insulation. The insulating bodies are also preferably produced from a ceramic material and preferably designed in the form of a plate, like the heating body. The heating element also has at least one functional body for providing an electrical conducting function, in particular an electrical conductivity, and for providing a bonding function, in particular the capability of forming a joining connection, in particular with a material-bonding, form-fitting and/or force-fitting effect, the functional body having large functional body areas oriented opposite one another. Preferably, the large functional body areas are formed parallel or substantially parallel to one another. Furthermore, the functional body may also preferably be designed in the form of a plate, like the heating body. **In** particular, the functional bodies, the insulating bodies and the heating body may in each case provide a thermal conducting function, in particular a thermal heat conductivity. It is also provided that a pair of functional bodies are arranged on the heating body, so that at least one large heating area lies substantially with its full surface area or with its full surface area against a large functional body area, in particular a large functional body area facing away from the insulating body, of the respective functional body, in particular in a physically and electrically contacting manner without any gap. The term "contacting" should be understood here as meaning that an electrically conductive intermediate layer may also be arranged between a functional body and the heating body, so that a functional body is not necessarily arranged in physical contact with the heating body, but in any event the electrical contact persists. Furthermore, an insulating body is arranged on at least one functional body, in such a way that the insulating body lies substantially with its full surface area or with its full surface area against a large functional body area facing away from the heating body of the respective functional body, in particular in a physically and at least thermally contacting manner without any gap. As a result, the functional body is preferably arranged, in particular fixed, with a material-bonding and/or force-fitting effect between the insulating body and the heating body in the manner of a sandwich or in the manner of a layer. It is essential to the invention that the functional body is of a two-part or multi-part design. It should also be mentioned in this connection that the term "multi-part" means two or more parts, for example three or four or more parts. By separating the functional body, it is possible to design different parts of the functional body differently on a functional basis, for example by a structural or material adaptation. In other words, a functional separation may be brought about by the separation of the functional body into two or more parts, so that for example one part can be optimized with respect to one function and another part can be optimized with respect to another function.

In particular, as a result a description is also given of an exemplary embodiment in which the heating element comprises exactly two functional bodies and exactly two insulating bodies. Preferably here, a large functional body area of a single functional body is in each case arranged on the two large heating areas of the heating body, substantially with its full surface area or with its full surface area. Also preferably, an insulating body is arranged on each functional body, in order to electrically insulate the respective functional body.

It is further essential to the invention, that for providing an electrical conducting function, in particular over a surface area, at least one functional body has a number of electrically conducting conductor structure parts, by means of which the functional body is electrically contacted on the heating body. For example, the conductor structure part is produced from an electrically conducting material, in particular from a silver or copper material. For example, the conductor structure part comprises sinterable electrical wire layers.

Furthermore, each functional body or insulating body may for example comprise a socket connector, on which the respective conductor structure part is arranged, while forming a contacting area. Preferably, the operating voltage necessary for operation can be fed in at the contacting areas, for example by means of the voltage supply system. This has the effect that the heating body can be supplied with electrical energy and therefore can be operated. It should also be mentioned that, in addition to the electrical conducting function, the conductor structure parts also provide a heat conducting function, so that heat can flow from the heating body through the conductor structure part.

It is further essential to the invention that, for providing a bonding function, at least one functional body has a number of bonding structure parts, by means of which the functional body is fixed on the one hand on the heating body and/or on the other hand on the respective insulating body, in particular in a bonding manner, with a material-bonding and/or force-fitting and/or form-fitting effect. As a result, the heating element may altogether be provided as a joined-together structural unit.

The bonding structure part is for example an adhesive or a glass solder or some other electrically non-conducting material. It should also be mentioned that, in addition to the bonding function, the bonding structure parts also provide a heat conducting function, so that heat can flow from the heating body through the bonding structure part.

In particular, the large heating area lying against the large functional body area on the heating body side may be electrically contacted by the conductor structure part over 0.1% to 50%, preferably 1% to 35%, of its surface area. This ensures that the heating body is electrically contacted over a sufficient percentage of its surface area to be able to provide the desired thermal function of the heating element unrestrictedly. This can likewise be achieved by a common contact area between the large functional body area on the heating body side and the large heating area being contacted by the conductor structure part over 0.1% to 50%, preferably 1% to 35%, of its surface area, in order to provide an electrical contacting area of 0.1% to 50%, preferably 1% to 35%.

Also in particular, the conductor structure part may form 0.1% to 50%, preferably 1% to 35%, of the volume of the functional body. It is also conceivable that the conductor structure part forms 0.1% to 50%, preferably 1% to 35%, of the surface area of the large functional body area on the heating body side and/or of the surface area of the large functional body area on the insulating body side. Also in this way, the electrical contacting of the heating body that ensures the desired operation of the heating element is ensured.

Expediently, the conductor structure part may be formed by a conductor path assembly comprising at least one electrically conductive conductor path for providing a surface-area electrical conducting function. The conductor path is in this case made of a silver material, a copper material and/or in a sinterable form. Furthermore, the conductor path assembly may preferably have a single electrically conductive conductor path or alternatively have a number of conductor paths that are electrically conductively separated from one another. **It** is also conceivable that the conductor path assembly has a number of conductor paths connected electrically conductively to one another with a material-bonding effect.

For the purpose of describing the conductor structure parts or conductor path assemblies or conductor paths, it should also be mentioned that the heating element preferably defines a Cartesian coordinate system, to be specific by a main axis, which is defined by the respective main direction of extent of the heating element, also by a transverse axis, which is defined orthogonally in relation to the main axis and orthogonally in relation to a surface normal of a large heating area, and also by a vertical axis, which is defined orthogonally in relation to the transverse axis and orthogonally in relation to the main axis.

Also expediently, the conductor path or the conductor paths of a conductor path assembly may define a comb-shaped, grid-shaped, cross-grid-shaped, meander-shaped or zig-zag-shaped conductor path pattern. **In** particular in the case of the comb-shaped design of a conductor path assembly, a surface-area electrical contacting of the heating body is achieved by a multiplicity of relatively narrow conductor paths parallel to one another, as in the case of a comb.

According to a preferred design, it is expediently provided that the respective conductor path pattern forms 0.1% to 50%, preferably 1% to 35%, of the surface area of the large functional body area on the heating body side. This has the advantage that a relatively closely or relatively widely meshed conductor path pattern can be provided, whereby for example the electrical contacting, in particular electrical contacting over a relatively large surface area, is possible.

Furthermore, one or more conductor paths may have a cross-sectional area which is oriented transversely in relation to its respective main direction of extent and is substantially rectangular or polygonal and constant or variable along the main direction of extent. **In** this case, the cross-sectional area may be wider in particular in the region of a socket connector of the heating element than in the region of a free end of the heating element arranged at a distance from the socket connector. This has the advantage that force effects on the heating element caused by thermal linear expansion are compensated.

Furthermore, it should also be mentioned that the conductor structure parts may be printed, adhesively bonded, sintered, soldered or stamped onto an insulating body or the heating body.

**It** is further essential to the invention, that imaginary clearances are formed between the respective conductor structure parts, in which the bonding structure parts are inserted. Preferably imaginary clearances also can be formed between the conductor path assemblies or conductor paths, in which the bonding structure parts are inserted. **It** is further essential to the invention, that the bonding structure parts are formed as complementing and supplementing the conductor structure parts. **In** this case, the bonding structure part may preferably be arranged on the conductor structure part with a material-bonding and/or force-fitting and/or form-fitting effect. This has the advantage that the functional body comprises exactly two parts, to be specific a conductor structure part and a bonding structure part. Altogether, in this way a relatively good electrical contacting of the heating body and a relatively good connection or bonding between the heating body, the functional body and the insulating body can be provided.

Expediently, the large heating area lying against the large functional body area on the heating body side may be connected in a bonding manner by the bonding structure part over 50% to 99.9%, preferably 65% to 99%, of its surface area, and the insulating body may be connected in this way over 50% to 100% of its surface area. This has the advantage that the heating body, the functional body and the insulating body form a relatively fixed subassembly, for example the components are undetachably fixed to one another.

Expediently, the bonding structure part may form 50% to 99.9%, preferably 65% to 99%, of the volume of the functional body. Also expediently, the bonding structure part may form 50% to 99.9%, preferably 65% to 99%, of the surface area of the large functional body area on the heating body side and/or of the surface area of the large functional body area on the insulating body side. **In** any event, it is preferred if the bonding structure part and the conductor structure part form 100% of the functional body.

According to a further idea, a common contact area between the large functional body area on the heating body side and the respective large heating area may be formed by the bonding structure part over 50% to 99.9%, preferably 65% to 99%, of its surface area, in order to fix an insulating body and the conductor structure part on the heating body with a material-bonding, force-fitting and/or form-fitting effect, so that an electrical contact between the conductor structure part and the heating body is established.

**In** particular, the bonding structure part may be formed by a bonding path assembly comprising at least one bonding path with a bonding effect for providing a bonding function, the bonding path assembly comprising exactly one single bonding path or a number of bonding paths that are separate from one another. Preferably, the bonding path assembly may comprise a number of bonding paths connected to one another with a material-bonding effect. A bonding path may preferably be produced from an electrically nonconducting adhesive or an electrically nonconducting glass solder or an electrically conducting material.

It is also provided in particular that the bonding path or the bonding paths of a bonding path assembly define a comb-shaped, grid-shaped, cross-grid-shaped, meander-shaped or zig-zag-shaped bonding path pattern, preferably like the conductor structure part.

It is also expedient if the respective bonding path pattern forms 50% to 99.9%, preferably 65% to 99%, of the surface area of the large functional body area on the heating body side, in order in particular to provide a relatively closely or relatively widely meshed bonding path pattern.

It is conceivable that the heating element may comprise a single functional body, which is wound around the heating body, so that a single contiguous large functional body area of the functional body is arranged on both large heating areas of the heating body substantially with its full surface area or with its full surface area, a pair of insulating bodies being arranged on the functional body in order to electrically insulate the functional body.

The heating body may also form or have an imaginary mirror plane or an imaginary mirror line, for example parallel to a coordinate plane defined by the vertical axis and the transverse axis, with respect to which the functional bodies, in particular the conductor structure parts and/or the bonding structure parts, are formed in a mirror-inverted or linear mirror-inverted manner. As a result, a diagonal and mirror-inverted arrangement as it were is provided with respect to the imaginary mirror plane or with respect to the imaginary mirror line. This has the advantage that a force effect of the heating body based on a thermal linear expansion can be compensated.

An intermediate layer may be arranged between one or all of the large heating areas and one or all of the large functional body areas. The intermediate layer is preferably of an electrically conductive design and preferably produced from a silver material or a silver alloy. For example, one or two or more layers of silver material are applied to the heating body. In this case, the electrical contacting of the heating body by means of the conductor structure parts takes place as it were through the intermediate layer. The intermediate layer has the advantage that the connection or contacting of the conductor structure parts and/or the bonding structure parts to the heating body is achieved more easily.

According to a further design, the insulating body and/or the heating body may have at least one open recess structured in the manner of a conductor path, in which a functional body is arranged, in particular a conductor structure part and/or a bonding structure part according to the previous description.

The invention comprises the alternative or additional further basic idea of providing a heating assembly, in particular PTC heating assembly, for heating a fluid. For this purpose, it is provided that the heating assembly is equipped with at least one heating element according to the previous description. Furthermore, the heating assembly has at least one circuit board designed for receiving and supplying power to heating elements, in particular a PCB (PCB: Printed Circuit Board). In this case at least one heating element may be operably arranged on the circuit board. As a result, a heating assembly by means of which fluid can be heated is provided.

Another basic idea of the invention, which can be realized in addition or as an alternative to the basic ideas mentioned further above, may be to equip a motor vehicle, in particular an electrically drivable road motor vehicle, preferably a hybrid motor vehicle, with an air-conditioning device which expediently serves for setting within a motor vehicle interior of the motor vehicle an air temperature that is prescribed or can be prescribed by a user. The air-conditioning device is equipped or can be equipped with at least one heating element and/or a heating assembly according to the previous description. The heating element and/or the heating assembly may in this case be used for example to maintain the temperature in the passenger compartment in the starting phase and in the driving phase of the motor vehicle, in particular when there are cold ambient temperatures.

Expediently, the heating element may be accommodated, in particular completely, in a housing, in particular a tubular housing. The housing is preferably produced from a ceramic material, is of a one-piece or multi-part form and additionally offers an electrical insulating effect, so that the heating element can additionally be insulated.

Preferably, each functional body is designed such that the respective conductor structure parts and bonding structure parts form a contiguous, uninterrupted body, in particular a relatively thin layer, for example 0.1 mm, 0.2 mm, 0.3 mm to 1 mm thick.

The heating bodies and/or the functional bodies and/or the insulating bodies and/or the intermediate layers may be formed in each case by a sheet-like, preferably layer-like, formation and expediently as relatively thin in each case, for example 0.1 mm, 0.2 mm, 0.3 mm, 0.4 mm, 0.5 mm to 1 mm thick.

To sum up, it remains to be stated: The present invention preferably relates to a heating element with a heating body for converting provided electrical energy into thermal energy. The heating element comprises at least one insulating body for electrical insulation and at least one functional body for providing an electrical conducting function and for providing a bonding function. In the assembled state, at least one functional body is arranged on the heating body, in order to electrically contact it. Furthermore, an insulating body is arranged on the respective functional body, in order to provide an electrical insulation of the functional body and of the heating body with respect to the outside. **In** this way, the heating body is preferably fixed between two functional bodies and two insulating bodies. **It** is essential to the invention that at least one functional body is of a two-part or multi-part design.

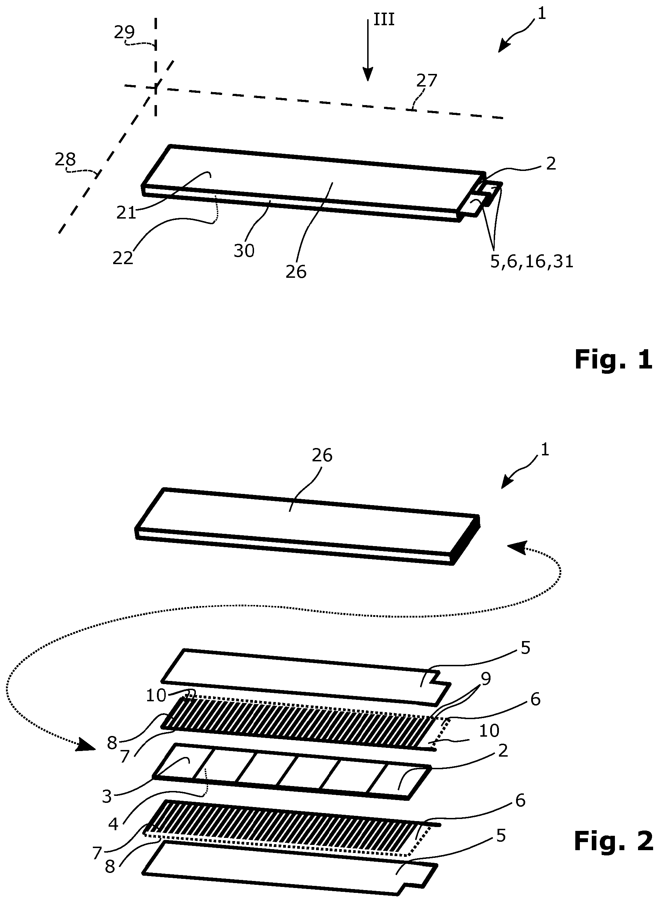

Further important features and advantages of the invention will emerge from the subclaims, from the drawings Fig. 1 to 10 and from the associated description of the figures on the basis of the drawings.

**It** goes without saying that the features mentioned above and those still to be explained below can be used not only in the respectively specified combination but also in other combinations or on their own without departing from the scope of the present invention.

Preferred exemplary embodiments of the invention are shown in the drawings Fig. 1 to 10 and will be explained in greater detail in the following description, with identical designations relating to identical or similar or functionally identical components.

**In** the drawings, in each case schematically
- Fig. 1: shows a perspective view of a preferred exemplary embodiment of a heating element,
- Fig. 2: shows the heating element from Fig. 1 in an exploded representation,
- Fig. 3: shows the heating element from Fig. 1 in a plan view according to an arrow III indicated there, a housing and an insulating body having been removed in order to afford a free view of components lying thereunder, in particular of a functional body,
- Fig. 4: shows the heating element from Fig. 3 in a sectional view according to a sectional line IV-IV indicated there by a dotted line,
- Fig. 5: shows an enlarged portion of the heating element from Fig. 3 in a plan view, a comb-like conductor path and bonding path pattern being evident in particular,
- Fig. 6: shows a portion of a further preferred exemplary embodiment of a heating element in a further plan view, the heating element being designed substantially identically to the heating element according to Fig. 1, though with a different conductor path and bonding path pattern, to be specific a further conductor path and bonding path pattern that is relatively widely meshed with respect to the exemplary embodiment according to Fig. 1 to 5 and likewise comb-like,
- Fig. 7: shows a portion of a further preferred exemplary embodiment of a heating element in a further plan view, the heating element being designed substantially identically to the heating element according to Fig. 1, though with a different conductor path and bonding path pattern, to be specific a conductor path and bonding path pattern that is designed in a meandering form,
- Fig. 8: shows a portion of a further preferred exemplary embodiment of a heating element in a further plan view, the heating element being designed substantially identically to the heating element according to Fig. 1, though with a different conductor path and bonding path pattern, to be specific a further conductor path and bonding path pattern that is relatively widely meshed with respect to the exemplary embodiment according to Fig. 7 and likewise designed in a meandering form,
- Fig. 9: shows a portion of a further preferred exemplary embodiment of a heating element in a further plan view, the heating element being designed substantially identically to the heating element according to Fig. 1, though with a different conductor path and bonding path pattern, to be specific a conductor path and bonding path pattern that is designed in the form of a cross or grid,
- Fig. 10: shows a portion of a further preferred exemplary embodiment of a heating element in a further plan view, the heating element being designed substantially identically to the heating element according to Fig. 1, though with a different conductor path and bonding path pattern, to be specific a further conductor path and bonding path pattern that is relatively widely meshed with respect to the exemplary embodiment according to Fig. 9 and likewise designed in the form of a cross or grid,
- Fig. 11: shows a plan view of an embodiment of a heating element not according to the claimed invention, wherein one functional body being indicated by a polygonal area shown in black and a further functional body being indicated by an area enclosed by dotted lines,
- Fig. 12: shows a further embodiment of a heating element not according to the claimed invention in a sectional view,
- Fig. 13: shows a further embodiment of a heating element not according to the claimed invention in a sectional view.

Figures 1 to 13 show altogether a number of preferred exemplary embodiments of a heating element 1, in particular a PTC heating element, which preferably serves for heating a fluid, preferably air or a temperature control fluid. Such heating elements 1 are preferably used in electrically drivable motor vehicles, in particular in electrically drivable road motor vehicles, more preferably in hybrid motor vehicles. For example, such heating elements 1 are fitted in heating assemblies installed in the bodies of such vehicles, in particular PTC heating assemblies, which serve for heating interior air.

Fig. 1 shows a preferred exemplary embodiment of a heating element 1 in a perspective view, with a housing 26, in particular a tubular housing. Inside, in particular completely inside, the housing 26, a number of components of the heating element 1 are arranged, to be specific at least one heating body 2, at least one functional body 6 and also at least one insulating body 5. In the present case, a pair of functional bodies 6 and a pair of insulating bodies 5 and a single heating body 2 are provided inside the housing 26. In any event, these components functionally interact in such a way that the heating body 2 can convert electrical energy provided at the heating element 1 into thermal energy, which can be used by the user, for example for heating fluid, in particular interior air.

The heating element 1 according to Fig. 1 preferably defines a Cartesian coordinate system. For this purpose, the heating element 1 defines a main axis 27 along its main direction of extent. Also defined is a transverse axis 28, which is defined orthogonally in relation to the main axis 27 and orthogonally in relation to a surface normal of a large area 21, 22 of the heating element 1. A person skilled in the art appreciates in this connection that a large area 21, 22 is designed as larger in terms of its surface area than for example a peripheral lateral heating element area 30 of the heating element 1 connecting the two large areas 21, 22 of the heating element 1 to one another. Also defined is a vertical axis 29, which is oriented orthogonally in relation to the transverse axis 28 and orthogonally in relation to the main axis 27.

In Fig. 1 it can also be seen that the heating element 1 has socket connectors, denoted by the designation 16 and protruding beyond the housing 26 in the direction of the main axis 27. The socket connectors 16 are in principle formed in each case by a functional body 6 or in each case by an insulating body 5. The socket connectors 16 have the purpose of receiving at least one conductor structure part 9, still to be discussed below, for which purpose each socket connector 16 defines a socket-connector mounting area 31. By way of example, the socket connectors 16 or the socket-connector mounting areas 31 are spaced apart from one another in the direction of the vertical axis 29 and aligned parallel with respect to a plane defined by the main axis 27 and the transverse axis 28. By this design it is possible for example to arrange a heating element 1 on a PCB (PCB: printed circuit board), for example in order to provide a heating assembly that can be used on a vehicle.

To allow them to be seen better, Fig. 2 shows the components of the heating element 1 according to Fig. 1 in an exploded representation. It can be seen in particular that a pair of insulating bodies 5, a pair of functional bodies 6 and also a heating body 2 have been withdrawn from the aforementioned housing 26 and arranged spaced apart transversely in relation to one another, so that the individual components can be seen relatively well. The heating body 2 expediently serves the purpose of converting electrical energy provided at the heating element 1 into thermal energy that can be used by a user. Expediently, the heating body 2 is designed for this purpose as a PTC heating body and defines two large heating areas 3, 4 oriented opposite one another.

According to Fig. 2, it can also be seen that the heating body 2 is made up of a number of individual heating body elements, which are preferably lined up one against the other in the direction of the main axis 27. It may also be provided that the heating body 2 is formed just by a single heating body element. In any event, the heating body 2 is flanked on each of both sides by a functional body 6, which in each case serve for providing an electrical conducting function and for providing a bonding function. Each functional body 6 defines a pair of large functional body areas 7, 8 oriented opposite one another. The large functional body areas 7, 8 are in the present case referred to for example as heating-body-side large functional body areas 7 or large functional body areas 7 facing away from the insulating body, if the respective large functional body areas 7 are facing the heating body 2. Equally, in the present case large functional body areas 8 are referred to as large functional body areas 8 facing away from the heating body or as large functional body areas 8 on the insulating body side if the respective large functional body areas 8 are facing insulating bodies 5 still to be described below. At least one insulating body 5 is in each case arranged on the large functional body areas 7, 8, in particular on the large functional body areas 8 on the insulating body side, of the functional bodies 6, each insulating body 5 serving for the electrical insulation of the heating element 1.

It is thus essential that a pair of functional bodies 6 are in each case arranged on the heating body 2 in such a way that at least one large heating area 3, 4 lies substantially with its full surface area or with its full surface area against a large functional body area 7 in each case of the respective functional body 6. Furthermore, an insulating body 5 is arranged on at least one functional body 6, in such a way that the respective insulating body 5 lies substantially with its full surface area or with its full surface area against a large functional body area 8 facing away from the heating body of the respective functional body 6. It is essential to the invention that at least one functional body 6 is of a two- or multi-part design. In Fig. 2, it can be seen for example that the functional bodies 6 have in each case a conductor structure part 9 and also a bonding structure part 10, the conductor structure part 9 providing an electrical conducting function and the bonding structure part 10 providing a bonding function. This advantageously achieves the effect that the respective functional body 6 can be arranged on the heating body 2 in an electrically contacting manner and also the respective insulating bodies 5 can be arranged on the heating body 2 in a bonding manner. In this connection, it can be imagined for example that the bonding structure part 10 forms a material-bonding and/or form-fitting and/or force-fitting connection, in particular a joining connection, between the heating body 2 on the one hand and the respective insulating body 5 on the other hand.

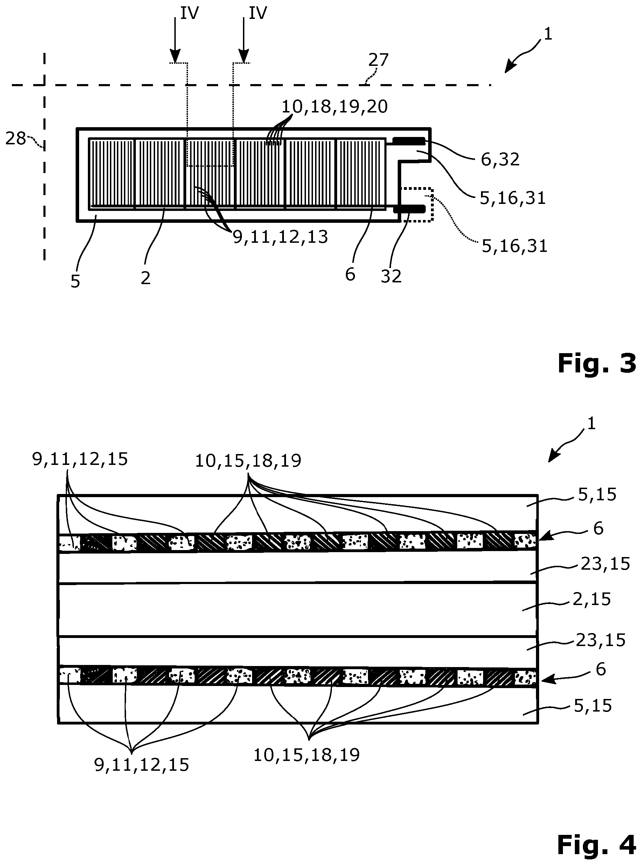

Fig. 3 shows the heating element 1 from Fig. 1 in a plan view according to an arrow III indicated there, the housing 26 and an insulating body 5 having been removed in order to afford a free view of components lying thereunder, in particular of a functional body 6. Specifically, in the present case an insulating body 5 can be seen, arranged as it were parallel to the plane of the page and extending along the vertical axis 27 and along the transverse axis 28. Arranged in surface-area contact on the insulating body 5 are, in this sequence, a largely concealed functional body 6, a heating body 2 and also a further functional body 6. All that can be seen of the functional body 6 lying at the bottom is a contacting area 32, which is arranged on a socket-connector mounting area 31 of a socket connector 16 of the insulating body 5. By means of a contacting area 32, the respective functional body 6 can for example be arranged on a PCB with electrical contact, so that for example operating voltage can be provided at the respective functional body 6. The heating body 2 arranged on the functional body 6 lying at the bottom has a number of heating body elements, which are lined up in contact with one another along the main axis 27. Arranged on the heating body 2 is a further functional body 6, which by way of example is of a two-part form, to be specific a conductor structure part 9 and a bonding structure part 10. The conductor structure part 9 is indicated by way of example by a number of lines arranged in the manner of a comb and likewise has a contacting area 32, arranged on the socket-connector mounting area 31, for the electrical contacting. The bonding structure part 10 is in the present case for example an adhesive or a glass solder and is symbolized by the free "white" intermediate regions between the lines of the conductor structure part 9. In any event, each functional body 6 is designed in such a way that the respective conductor structure parts 9 and bonding structure parts 10 form a continuous, uninterrupted body, in particular a relatively thin layer, for example 0.1 mm, 0.2 mm, 0.3 mm to 1 mm thick.

The conductor structure part 9 comprises by way of example a conductor path assembly 11 comprising a number of conductor paths 12. The conductor path assembly 11 or the conductor paths 12 together form a conductor path pattern 13. According to Fig. 3, the conductor path pattern 13 is by way of example of a comb-like design. The bonding structure part 10 is preferably formed as complementing and supplementing the conductor structure part 9, so that according to Fig. 3 a bonding path pattern 20 is formed by a bonding path assembly 18 comprising bonding paths 19 in a way analogous to the conductor path pattern 13. The individual comb-like path structures of the conductor path pattern 13 and of the bonding path pattern 20 in this case preferably engage in one another in a tooth-like and gapless manner.

Fig. 4 shows the heating element 1 from Fig. 3 in a sectional view according to a sectional line IV-IV indicated there by a dotted line, so that as it were cross-sectional areas 15 of the components described above can be seen. In particular, it can be seen relatively well that the heating body 2 is enclosed as it were in the manner of a layer or in the manner of a sandwich between the functional bodies 6 and the insulating bodies 5. According to Fig. 4, as a departure from Figures 1 to 3, it is envisaged to arrange an intermediate layer 23 in each case between the heating body 2 and the two functional bodies 6. The intermediate layer 23 is for example produced from silver or copper material and serves the purpose of improving the electrical connection of the functional bodies 6, or of the electrically conductive conductor structure parts 9, to the heating body 2.

According to Fig. 4, it can also be seen that the functional bodies 6 are divided in two. To be specific, they comprise on the one hand the conductor structure part 9 and on the other hand the bonding structure part 10. It can be seen relatively well that the conductor structure part 9 has a conductor path assembly 11 comprising conductor paths 12, the cross-sectional areas 15 of which are symbolised in the present case by dotted boxes. Furthermore, it can also be seen relatively well that the bonding structure part 10 has a bonding path assembly 18 comprising bonding paths 19, the cross-sectional areas 15 of which are in the present case symbolized by cross-hatched boxes.

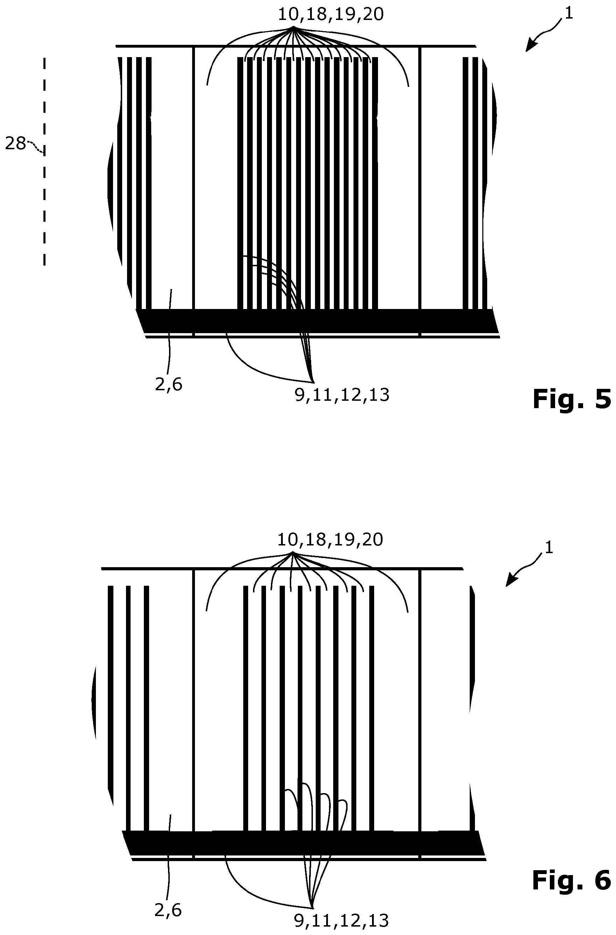

In Fig. 5 a portion of the heating element 1 from Fig. 3 is shown in a plan view, where comb-like conductor path and bonding path patterns 13, 20 can be seen in particular. Preferably, the conductor paths 12 or the bonding paths 19 extend substantially parallel to the transverse axis 28 according to Fig. 1. Expediently, the conductor path pattern 13 is relatively closely meshed, in particular so closely meshed that a surface-area contacting of the heating body 2 or of the intermediate layer 23 can be realized with the conductor paths 12 over 0.1% to 50% of its surface area.

To avoid repetition, if they are similar or identical from a functional and/or design aspect to the components provided by the first exemplary embodiment according to Fig. 1 to 5, the components of the exemplary embodiment shown in Fig. 6 are provided with the same designations as in Fig. 1 to 5. In Fig. 6, a portion of a preferred further exemplary embodiment of the heating element 1 is shown in a plan view, analogous to Fig. 3 and 5, a housing 26 and an insulating body 5 having been removed in order to afford a free view of components lying thereunder, in particular of a functional body 6. The heating element 1 is designed substantially identically to the heating element 1 according to Fig. 1. Only the conductor path and bonding path pattern 13, 20 there is differently designed. With respect to the exemplary embodiment according to Fig. 1 to 5, to be specific the present conductor path and bonding path pattern 13, 20 is designed as relatively widely meshed and comb-like.

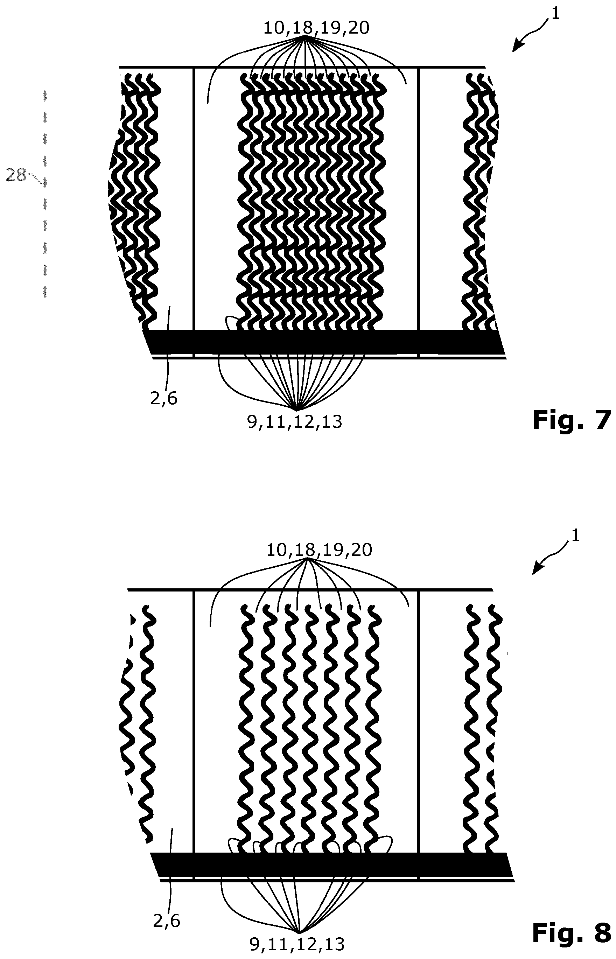

To avoid repetition, if they are similar or identical from a functional and/or design aspect to the components provided by the first exemplary embodiment according to Fig. 1 to 5, the components of the exemplary embodiment shown in Fig. 7 are provided with the same designations as in Fig. 1 to 5. In Fig. 7, a portion of a preferred further exemplary embodiment of a heating element 1 is shown in a plan view, analogous to Fig. 3 and 5, a housing 26 and an insulating body 5 having been removed in order to afford a free view of components lying thereunder, in particular of a functional body 6. The heating element 1 is designed substantially identically to the heating element 1 according to Fig. 1. Only the conductor path and bonding path pattern 13, 20 there is differently designed, to be specific is designed as relatively widely meshed and in a meandering form or in a wavy curved form with respect to the transverse axis 28.

To avoid repetition, if they are similar or identical from a functional and/or design aspect to the components provided by the first exemplary embodiment according to Fig. 1 to 5, the components of the exemplary embodiment shown in Fig. 8 are provided with the same designations as in Fig. 1 to 5. In Fig. 8, a portion of a preferred further exemplary embodiment of a heating element 1 is shown in a plan view, analogous to Fig. 3 and 5, a housing 26 and an insulating body 5 again having been removed in order to afford a free view of components lying thereunder, in particular of a functional body 6. The heating element 1 is again designed substantially identically to the heating element 1 according to Fig. 1. Only the conductor path and bonding path pattern 13, 20 there is formed differently. With respect to the exemplary embodiment according to Fig. 7, to be specific the conductor path and bonding path pattern 13, 20 is designed as relatively widely meshed and likewise of a meandering or curved form.

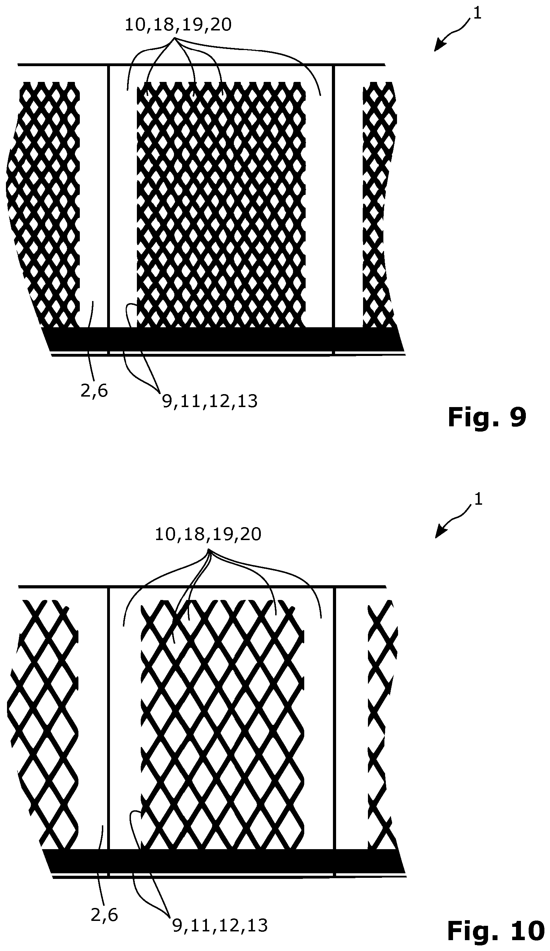

To avoid repetition, if they are similar or identical from a functional and/or design aspect to the components provided by the first exemplary embodiment according to Fig. 1 to 5, the components of the exemplary embodiment shown in Fig. 9 are provided with the same designations as in Fig. 1 to 5. In Fig. 9, a portion of a preferred further exemplary embodiment of a heating element 1 is shown in a plan view, analogous to Fig. 3 and 5, a housing 26 and an insulating body 5 again having been removed in order to afford a free view of components lying thereunder, in particular of a functional body 6. The heating element 1 is designed substantially identically to the heating element 1 according to Fig. 1. Only the conductor path and bonding path pattern 13, 20 there is formed differently, to be specific by a conductor path and bonding path pattern designed in the form of a cross or grid.

To avoid repetition, if they are similar or identical from a functional and/or design aspect to the components provided by the first exemplary embodiment according to Fig. 1 to 5, the components of the exemplary embodiment shown in Fig. 10 are provided with the same designations as in Fig. 1 to 5. In Fig. 10, a portion of a preferred further exemplary embodiment of a heating element 1 is shown in a plan view, analogous to Fig. 3 and 5, a housing 26 and an insulating body 5 again having been removed in order to afford a free view of components lying thereunder, in particular of a functional body 6. The heating element 1 is designed substantially identically to the heating element 1 according to Fig. 1. Only the conductor path and bonding path pattern 13, 20 there is formed differently, to be specific with respect to the exemplary embodiment according to Fig. 9 relatively widely meshed and likewise designed in the form of a cross or grid.

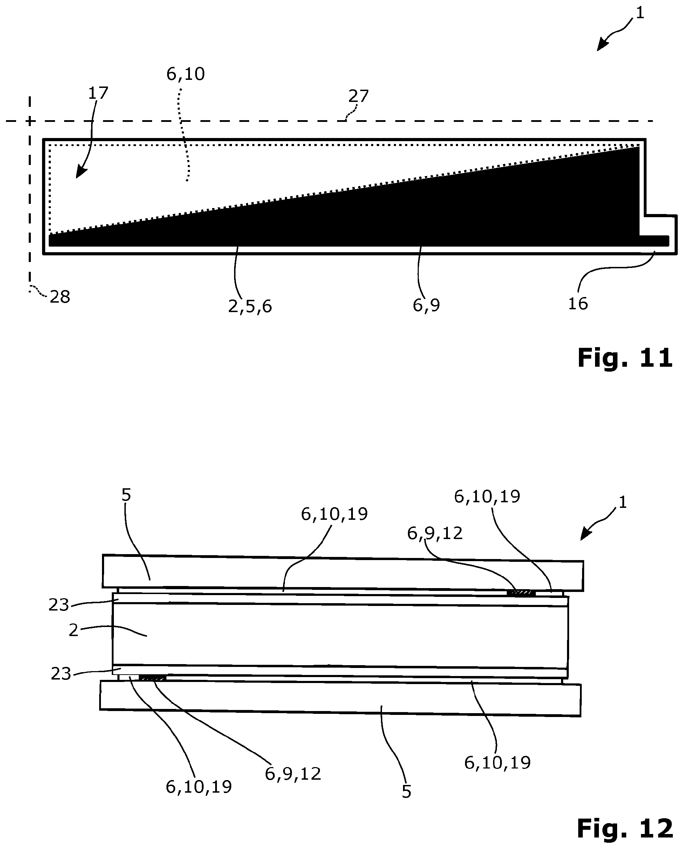

To avoid repetition, if they are similar or identical from a functional and/or design aspect to the components provided by the first exemplary embodiment according to Fig. 1 to 5, the components of the exemplary embodiment shown in Fig. 11 are provided with the same designations as in Fig. 1 to 5. In Fig. 11, a plan view that shows a further preferred exemplary embodiment of a heating element 1 is represented, in particular one conductor structure part 9 of the functional body 6 there being indicated by a polygonal area shown in black and the bonding structure part 10 being indicated by an area enclosed by dotted lines. It can be seen that the conductor structure part 9 there extends along the main axis 27, being formed relatively widely in terms of its surface area in the region of a socket connector 16 of an insulating body 5 of the heating element 1, i.e. preferably forming the functional body 6 over the full width transversely in relation to the main axis 27, in the direction of the transverse axis 28, in order preferably to contact the heating body 2 there over its full surface area in this portion. From the socket connector 16, the conductor structure part 9 tapers in its surface area away from the socket connector 16 in the direction of the main axis 27 towards a free end 17, so that altogether a triangular area is defined. The bonding structure part 10 is designed as it were oppositely, to be specific with a relatively small surface area in the region of the socket connectors 16 and with an increasingly larger surface area away from the socket connectors 16 in the direction of the main axis 27 towards the free end 17 of the heating element 1.

A second functional body 6, which cannot be seen in Fig. 11, arranged under the heating body 2, may be formed identically or mirror-invertedly with respect to the heating body 2, in such a way that on each of both sides of the heating body 2 a bonding structure part 10 of a triangular area and a conductor structure part 9 of a triangular area are arranged in line and preferably congruently.

To avoid repetition, if they are similar or identical from a functional and/or design aspect to the components provided by the first exemplary embodiment according to Fig. 1 to 5, the components of the exemplary embodiment shown in Fig. 12 are provided with the same designations as in Fig. 1 to 5. In Fig. 12, a preferred further exemplary embodiment of a heating element 1 that has the known components, to be specific in particular intermediate layers 23, functional bodies 6 and insulating bodies 5 stacked onto a heating body 2 on both sides in the manner of layers and in physical contact, is represented in a sectional view. The exemplary embodiment in the present case differs from the previous exemplary embodiments in particular in that a functional body 6 has only a single conductor path 12, which is for example flanked on both sides by a bonding path 19 of a bonding structure part 10. The respective conductor paths 12 of a functional body 6 in this case preferably extend straight along the main direction of extent of the heating body 2, in order to contact the latter electrically.

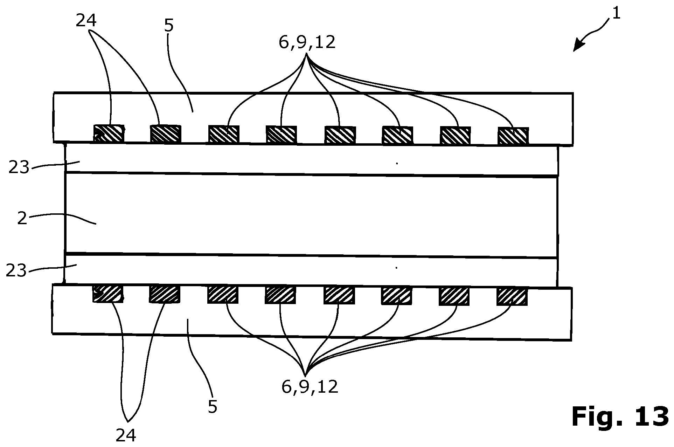

To avoid repetition, if they are similar or identical from a functional and/or design aspect to the components provided by the first exemplary embodiment according to Fig. 1 to 5, the components of the exemplary embodiment shown in Fig. 13 are provided with the same designations as in Fig. 1 to 5. In Fig. 13, a further preferred exemplary embodiment of a heating element 1 is shown in a sectional view, the insulating body 5 and/or the heating body 2 there having at least one open recess 24 structured in the manner of a conductor path, in which a functional body 6 is arranged, in particular a conductor structure parts 9 and/or conductor paths 12. For the electrical connection of the conductor structure parts 9 or the conductor paths 12, an intermediate layer 23 is provided.

## Claims

1. Heating element (1), in particular for an electrically drivable motor vehicle,
- with a heating body (2) for converting electrical energy into thermal energy, the heating body (2) having large heating areas (3,4) oriented opposite one another,
- with at least one insulating body (5) for electrical insulation,
- with at least one functional body (6) for providing an electrical conducting function and for providing a bonding function, the functional body (6) having large functional body areas (7, 8) oriented opposite one another,
- wherein a pair of functional bodies (6) being arranged on the heating body (2), so that at least one large heating area (3, 4) lies substantially with its full surface area or with its full surface area against a large functional body area (7) of a functional body (6),
- an insulating body (5) being arranged on at least one functional body (6), so that the insulating body (5) lies substantially with its full surface area or with its full surface area against a large functional body area (8) of the respective functional body (6),
- wherein at least one functional body (6) is of a two-part or multi-part design,
- wherein, for providing a bonding function, at least one functional body (6) has a number of bonding structure parts (10), by means of which the functional body (6) is fixed on the one hand on the heating body (2) and/or on the other hand on the insulating body (5) with a material-bonding and/or force-fitting and/or form-fitting effect,
**characterized**
- **in that**, for providing an electrical conducting function, at least one functional body (6) has a number of conductor structure parts (9), by means of which the functional body (6) is electrically contacted on the heating body (2),
- wherein imaginary clearances are formed between the respective conductor structure parts (9) in which the bonding structure parts (10) are inserted,
- wherein the bonding structure parts (10) are formed as complementing and supplementing the conductor structure parts (9).

2. Heating element according to claim 1,
**characterized**
- **in that** the large heating area (3, 4) lying against a large functional body area (7, 8) is electrically contacted by the conductor structure parts (9) over 0.1% to 50%, preferably 1% to 35%, of its surface area.

3. Heating element (1) according to claim 1 or 2,
**characterized**
- **in that** the conductor structure parts (9) form 0.1% to 50%, preferably 1% to 35%, of the volume of the functional body (6), and/or
- **in that** the conductor structure parts (9) form 0.1% to 50%, preferably 1% to 35%, of the surface area of the large functional body area (7) on the heating body side and/or of the surface area of the large functional body area (8) on the insulating body side.

4. Heating element (1) according to one of claims 1 to 3,
**characterized**
- **in that** the conductor structure parts (9) are formed by a conductor path assembly (11) comprising at least one electrically conductive conductor path (12) for providing an electrically conducting function, the conductor path assembly (11) comprises a number of electrically conductively separated conductor paths (12), or
- the conductor path assembly (11) comprises a number of conductor paths (12) electrically conductively connected to one another with a material-bonding effect.

5. Heating element (1) according to claim 4,
**characterized**
- **in that** the conductor paths (12) of a conductor path assembly (11) define a comb-shaped, grid-shaped, cross-grid-shaped, meander-shaped or zig-zag-shaped conductor path pattern (13), or
- **in that** one or more conductor paths (12) have a cross-sectional area (15) which is oriented transversely in relation to its respective main direction of extent and is substantially rectangular or polygonal and constant or variable in surface area along its respective main direction of extent, the cross-sectional area (15) being wider in its surface area in particular in the region of a socket connector (16) of the heating element (1) than in the region of a free end (17) of the heating element (1) arranged at a distance from the socket connector (16), or
- **in that** the respective conductor path pattern (13) forms 0.1% to 50%, preferably 1% to 35%, of the surface area of the large functional body areas (7, 8), in order in particular to provide a relatively closely or relatively widely meshed conductor path pattern (13).

6. Heating element (1) according to one of claims 1 to 5,
**characterized**
- **in that** the bonding structure parts (10) are arranged on the conductor structure parts (9) with a material-bonding and/or force-fitting and/or form-fitting effect, or
- **in that** the large heating area (3, 4) lying against a large functional body area (7) is connected in a bonding manner by the bonding structure parts (10) over 50% to 99.9%, preferably 65% to 99%, of its surface area, and an insulating body (5) is connected in this way over 50% to 100% of its surface area.

7. Heating element (1) according to one of claims 1 to 6,
**characterized**
- **in that** the bonding structure parts (10) form 50% to 99.9%, preferably 65% to 99%, of the volume of a functional body (6), and/or
- **in that** the bonding structure parts (10) form 50% to 99.9%, preferably 65% to 99%, of the surface area of the large functional body area (7) on the heating body side and/or of the surface area of the large functional body area (8) on the insulating body side.

8. Heating element (1) according to one of claims 1 to 7,
**characterized**
- **in that** the bonding structure parts (10) are formed by a bonding path assembly (18) comprising at least one bonding path (19) with a bonding effect for providing a bonding function, the bonding path assembly (18) comprising a number of bonding paths (19) that are separate from one another, or
- **in that** the bonding path assembly (18) comprises a number of bonding paths (19) connected to one another with a material-bonding effect.

9. Heating element (1) according to claim 8,
**characterized**
- **in that** the bonding paths (19) of a bonding path assembly (18) define a comb-shaped, grid-shaped, cross-grid-shaped, meander-shaped or zig-zag-shaped bonding path pattern (20), and/or
- **in that** the respective bonding path pattern (20) forms 50% to 99.9%, preferably 65% to 99%, of the surface area of the large functional body areas (7, 8), in order in particular to provide a relatively closely or relatively widely meshed bonding path pattern (20), and/or
- **in that** the bonding path pattern (20) is formed as complementing and supplementing the conductor path pattern (13).

10. Heating element (1) according to one of the preceding claims, **characterized**
**in that** the heating body (2) has an imaginary mirror plane or an imaginary mirror line, with respect to which the two functional bodies (6), in particular their conductor structure parts (9) and bonding structure parts (10), are formed in a mirror-inverted or linear mirror-inverted manner, in order to provide a mirror-diagonal arrangement with respect to the imaginary mirror plane or with respect to the imaginary mirror line, in order in particular to compensate for a force effect of the heating body (2) flowed through by current.

11. Heating element (1) according to one of the preceding claims, **characterized**
- **in that** an intermediate layer (23), which is preferably produced from a silver material or a silver alloy and is electrically conductive, is arranged between one or all of the large heating areas (3, 4) and one or all of the large functional body areas (7, 8), or
- **in that** at least one insulating body (5) and/or the heating body (2) has at least one open recess (24), in which a functional body (6) is arranged, in particular conductor structure parts (9) according to claims 1 to 5.

12. Heating assembly, in particular PTC heating assembly, for heating a fluid,
- with at least one heating element (1) according to one of claims 1 to 11,
- with at least one circuit board designed for receiving and supplying power to heating elements (1), in particular a PCB,
- at least one heating element (1) being operably arranged on the circuit board.

13. Motor vehicle, in particular electrically drivable road motor vehicle, preferably a hybrid road motor vehicle,
- with an air-conditioning device, expediently for setting within a motor vehicle interior of the motor vehicle an air temperature that is prescribed or can be prescribed by a user,
- with at least one heating element (1) according to one of claims 1 to 11 and/or a heating assembly according to claim 12 arranged in the air-conditioning device.

## Patentansprüche

1. Heizelement (1), insbesondere für ein elektrisch angetriebenes Kraftfahrzeug,
- mit einem Heizkörper (2) zur Umwandlung elektrischer Energie in thermische Energie, wobei der Heizkörper (2) große, einander gegenüberliegende Heizflächen (3, 4) aufweist,
- mit mindestens einem Isolierkörper (5) zur elektrischen Isolierung,
- mit mindestens einem Funktionskörper (6) zur Bereitstellung einer elektrischen Leitungsfunktion und zur Bereitstellung einer Verbindungsfunktion, wobei der Funktionskörper (6) große Funktionskörperflächen (7, 8) aufweist, die einander gegenüberliegen,
- wobei ein Paar Funktionskörper (6) auf dem Heizkörper (2) so angeordnet ist, dass mindestens eine große Heizfläche (3, 4) im Wesentlichen mit ihrer gesamten Oberfläche oder mit ihrer gesamten Oberfläche an einer großen Funktionskörperfläche (7) eines Funktionskörpers (6) anliegt,
- ein Isolierkörper (5), der auf mindestens einem Funktionskörper (6) angeordnet ist, so dass der Isolierkörper (5) im Wesentlichen mit seiner gesamten Oberfläche oder mit seiner gesamten Oberfläche an einer großen Funktionskörperfläche (8) des jeweiligen Funktionskörpers (6) anliegt,
- wobei mindestens ein Funktionskörper (6) zwei- oder mehrteilig ausgeführt ist,
- wobei zur Bereitstellung einer Verbindungsfunktion mindestens ein Funktionskörper (6) eine Anzahl von Verbindungsstrukturteilen (10) aufweist, mittels derer der Funktionskörper (6) einerseits am Heizkörper (2) und/oder andererseits am Isolierkörper (5) mit einer materialverbindenden und/oder kraftschlüssigen und/oder formschlüssigen Wirkung befestigt ist,
**dadurch gekennzeichnet,**
- **dass** zur Bereitstellung einer elektrisch leitenden Funktion mindestens ein Funktionskörper (6) eine Anzahl von Leiterstrukturteilen (9) aufweist, mittels derer der Funktionskörper (6) elektrisch mit dem Heizkörper (2) in Kontakt steht,
- wobei zwischen den jeweiligen Leiterstrukturteilen (9), in die die Verbindungsstrukturteile (10) eingesetzt sind, imaginäre Spalte gebildet werden,
- wobei die Verbindungsstrukturteile (10) so ausgebildet sind, dass sie die Leiterstrukturteile (9) ergänzen und vervollständigen.

2. Heizelement nach Anspruch 1
**dadurch gekennzeichnet,**
- **, dass** die große Heizfläche (3, 4), die an einer großen Funktionskörperfläche (7, 8) anliegt, durch die Leiterstrukturteile (9) über 0,1 % bis 50 %, bevorzugt 1 % bis 35 %, ihrer Oberfläche elektrisch kontaktiert wird.

3. Heizelement (1) nach Anspruch 1 oder 2,
**dadurch gekennzeichnet,**
- **dass** die Leiterstrukturteile (9) 0,1 % bis 50 %, bevorzugt 1 % bis 35 %, des Volumens des Funktionskörpers (6) bilden, und/oder
- **dass** die Leiterstrukturteile (9) 0,1 % bis 50 %, bevorzugt 1 % bis 35 %, der Oberfläche des großen Funktionskörperbereichs (7) auf der Heizkörperseite und/oder der Oberfläche des großen Funktionskörperbereichs (8) auf der Isolierkörperseite bilden.

4. Heizelement (1) nach einem der Ansprüche 1 bis 3,
**dadurch gekennzeichnet,**
- **dass** die Leiterstrukturteile (9) durch eine Leiterbahnanordnung (11) gebildet sind, die mindestens eine elektrisch leitende Leiterbahn (12) zum Bereitstellen einer elektrisch leitenden Funktion umfasst, wobei die Leiterbahnanordnung (11) eine Anzahl elektrisch leitend getrennter Leiterbahnen (12) umfasst, oder
- **dass** die Leiterbahnanordnung (11) eine Anzahl von Leiterbahnen (12) umfasst, die mit einer materialverbindenden Wirkung elektrisch leitend miteinander verbunden sind.

5. Heizelement (1) nach Anspruch 4,
**dadurch gekennzeichnet,**
- **dass** die Leiterbahnen (12) einer Leiterbahnanordnung (11) ein kammförmiges, gitterförmiges, kreuzgitterförmiges, mäanderförmiges oder zickzackförmiges Leiterbahnmuster (13) definieren, oder
- **dass** eine oder mehrere Leiterbahnen (12) eine Querschnittsfläche (15) aufweisen, die quer zu ihrer jeweiligen Hauptausdehnungsrichtung ausgerichtet und im Wesentlichen rechteckig oder polygonal ist und deren Oberfläche entlang ihrer jeweiligen Hauptausdehnungsrichtung konstant oder variabel ist, wobei die Querschnittsfläche (15) insbesondere im Bereich eines Steckverbinders (16) des Heizelements (1) größer ist als im Bereich eines freien Endes (17) des Heizelements (1), das in einem Abstand vom Steckverbinder (16) angeordnet ist, oder
- **dass** das jeweilige Leiterbahnmuster (13) 0,1 % bis 50 %, bevorzugt 1 % bis 35 %, der Oberfläche der großen funktionellen Körperbereiche (7, 8) bildet, um insbesondere ein relativ engmaschiges oder relativ weitmaschiges Leiterbahnmuster (13) bereitzustellen.

6. Heizelement (1) nach einem der Ansprüche 1 bis 5,
**dadurch gekennzeichnet,**
- **dass** die Verbindungsstrukturteile (10) mit einer materialverbindenden und/oder kraftschlüssigen und/oder formschlüssigen Wirkung an den Leiterstrukturteilen (9) angeordnet sind, oder
- **dass** die große Heizfläche (3, 4) an einen großen Funktionskörperbereich (7) über 50 % bis 99,9 %, bevorzugt 65 % bis 99 %, seiner Fläche durch die Verbindungsstrukturteile (10) mit einer materialverbindenden Wirkung verbunden ist und ein Isolierkörper (5) auf diese Weise über 50 % bis 100 % seiner Fläche verbunden ist.

7. Heizelement (1) nach einem der Ansprüche 1 bis 6,
**dadurch gekennzeichnet,**
- **dass** die Verbindungsstrukturteile (10) 50 % bis 99,9 %, bevorzugt 65 % bis 99 %, des Volumens eines Funktionskörpers (6) bilden, und/oder
- **dass** die Verbindungsstrukturteile (10) 50 % bis 99,9 %, bevorzugt 65 % bis 99 %, der Oberfläche des großen Funktionskörperbereichs (7) auf der Heizkörperseite und/oder der Oberfläche des großen Funktionskörperbereichs (8) auf der Isolierkörperseite bilden.

8. Heizelement (1) nach einem der Ansprüche 1 bis 7,
**dadurch gekennzeichnet,**
- **dass** die Verbindungsstrukturteile (10) durch eine Verbindungsbahnanordnung (18) gebildet werden, die mindestens einen Verbindungsbahn (19) mit verbindender Wirkung zur Bereitstellung einer Verbindungsfunktion umfasst, wobei die Verbindungsbahnanordnung (18) eine Anzahl von Verbindungsbahnen (19) umfasst, die voneinander getrennt sind, oder
- **dass** die Verbindungsbahnanordnung (18) eine Anzahl von Verbindungsbahnen (19) umfasst, die durch eine materialverbindende Wirkung miteinander verbunden sind.

9. Heizelement (1) nach Anspruch 8,
**dadurch gekennzeichnet,**
- **dass** die Verbindungsbahne (19) einer Verbindungsbahnanordnung (18) ein kammförmiges, gitterförmiges, kreuzgitterförmiges, mäanderförmiges oder zickzackförmiges Verbindungsbahnmuster (20) definieren, und/oder
- **dass** das jeweilige Verbindungsbahnmuster (20) 50 % bis 99,9 %, bevorzugt 65 % bis 99 %, der Oberfläche der großen Funktionskörperbereiche (7, 8) bildet, insbesondere um ein relativ dichtes oder relativ weitmaschiges Verbindungsbahnmuster (20) bereitzustellen, und/oder
- **dass** das Verbindungsbahnmuster (20) so ausgebildet sind, dass es das Leiterbahnmuster (13) ergänzt und vervollständigt.

10. Heizelement (1) nach einem der vorstehenden Ansprüche,
**dadurch gekennzeichnet,**
**dass** der Heizkörper (2) eine imaginäre Spiegelebene oder eine imaginäre Spiegelachse aufweist, in Bezug auf die die beiden Funktionskörper (6), insbesondere deren Leiterstrukturteile (9) und Verbindungsstrukturteile (10), spiegelbildlich oder linear spiegelbildlich ausgebildet sind, um eine spiegeldiagonale Anordnung in Bezug auf die imaginäre Spiegelebene oder in Bezug auf die imaginäre Spiegellinie zu bereitzustellen, insbesondere um eine Krafteinwirkung des stromdurchflossenen Heizkörpers (2) auszugleichen.

11. Heizelement (1) nach einem der vorstehenden Ansprüche,
**dadurch gekennzeichnet,**
- **dass** eine Zwischenschicht (23), die bevorzugt aus einem Silbermaterial oder einer Silberlegierung hergestellt ist und elektrisch leitfähig ist, zwischen einem oder allen der großen Heizbereiche (3, 4) und einem oder allen der großen Funktionskörperbereiche (7, 8) angeordnet ist, oder
- **dass** mindestens ein Isolierkörper (5) und/oder der Heizkörper (2) mindestens eine offene Aussparung (24) aufweist, in der ein Funktionskörper (6) angeordnet ist, insbesondere Leiterstrukturteile (9) nach den Ansprüchen 1 bis 5.

12. Heizanordnung, insbesondere ein PTC-Heizanordnung, zum Erhitzen einer Flüssigkeit,
- mit mindestens einem Heizelement (1) nach einem der Ansprüche 1 bis 11,
- mit mindestens einer Leiterplatte, die zum Empfangen und Zuführen von Strom an Heizelemente (1) ausgelegt ist, insbesondere einer Leiterplatte,
- mindestens einem Heizelement (1), das funktionsfähig auf der Leiterplatte angeordnet ist.

13. Kraftfahrzeug, insbesondere elektrisch antreibbares Straßenkraftfahrzeug, bevorzugt ein Hybrid-Straßenkraftfahrzeug,
- mit einer Klimaanlagevorrichtung, zweckmäßigerweise zum Einstellen einer vom Benutzer vorgegebenen oder vorzugebenden Lufttemperatur im Innenraum des Kraftfahrzeugs,
- mit mindestens einem Heizelement (1) nach einem der Ansprüche 1 bis 11 und/oder einer Heizanordnung nach Anspruch 12, die in der Klimaanlagevorrichtung angeordnet ist.

## Revendications

1. Élément chauffant (1), en particulier pour un véhicule à moteur à entraînement électrique,
- avec un corps chauffant (2) pour convertir l'énergie électrique en énergie thermique, le corps chauffant (2) présentant de grandes surfaces de chauffage (3,4) orientées à l'opposé les unes des autres,
- avec au moins un corps isolant (5) pour l'isolation électrique,
- avec au moins un corps fonctionnel (6) pour assurer une fonction de conduction électrique et pour assurer une fonction de liaison, le corps fonctionnel (6) présentant de grandes zones fonctionnelles (7, 8) orientées à l'opposé les unes des autres,
- dans lequel une paire de corps fonctionnels (6) sont agencés sur le corps chauffant (2), de telle sorte qu'au moins une grande zone de chauffage (3, 4) s'étend sensiblement avec toute sa surface, ou avec toute sa surface, contre une grande zone de corps fonctionnel (7) d'un corps fonctionnel (6),
- un corps isolant (5) étant agencé sur au moins un corps fonctionnel (6), de telle sorte que le corps isolant (5) s'étend sensiblement avec toute sa surface, ou avec toute sa surface, contre une grande surface de corps fonctionnel (8) du corps fonctionnel respectif (6),
- dans lequel au moins un corps fonctionnel (6) est de conception en deux parties ou en plusieurs parties,
- dans lequel, pour assurer une fonction de liaison, au moins un corps fonctionnel (6) présente un certain nombre de parties de structure de liaison (10), au moyen desquelles le corps fonctionnel (6) est fixé d'une part sur le corps chauffant (2) et/ou d'autre part, sur le corps isolant (5) avec un effet de liaison de matériau et/ou d'ajustement forcé et/ou de complémentarité de forme moulant,
**caractérisé**
- **en ce que**, pour assurer une fonction de conduction électrique, au moins un corps fonctionnel (6) présente un certain nombre de parties de structure conductrice (9), au moyen desquelles le corps fonctionnel (6) est mis en contact électrique avec le corps chauffant (2),
- dans lequel des dégagements imaginaires sont formés entre les parties de structure conductrice respectives (9) dans lesquelles les parties de structure de liaison (10) sont insérées,
- dans lequel les parties de structure de liaison (10) sont formées de manière à compléter et à renforcer les parties de structure conductrice (9).

2. Élément chauffant selon la revendication 1,
**caractérisé**
- **en ce que** la grande zone de chauffage (3, 4) s'étend contre une grande zone de corps fonctionnel (7, 8) est mise en contact électrique par les parties de structure conductrice (9) sur 0,1 % à 50 %, de préférence 1 % à 35 %, de sa surface.

3. Élément chauffant (1) selon la revendication 1 ou 2,
**caractérisé**
- **en ce que** les parties de structure conductrice (9) forment 0,1 % à 50 %, de préférence 1 % à 35 %, du volume du corps fonctionnel (6), et/ou
- **en ce que** les parties de structure conductrice (9) forment 0,1 % à 50 %, de préférence 1 % à 35 %, de la surface de la grande zone de corps fonctionnel (7) du côté corps chauffant et/ou de la surface de la grande zone de corps fonctionnel (8) du côté corps isolant.

4. Élément chauffant (1) selon l'une des revendications 1 à 3,
**caractérisé**
- **en ce que** les parties de structure conductrice (9) sont formées par un ensemble chemin conducteur (11) comprenant au moins un chemin conducteur électroconducteur (12) pour assurer une fonction de conduction électrique, l'ensemble chemin conducteur (11) comprend un certain nombre de chemins conducteurs (12) séparés de manière électroconductrice, ou
- l'ensemble chemin conducteur (11) comprend un certain nombre de chemins conducteurs (12) raccordés de manière électroconductrice les uns aux autres par un effet de liaison de matériau.

5. Élément chauffant (1) selon la revendication 4,
**caractérisé**
- **en ce que** les chemins conducteurs (12) d'un ensemble chemin conducteur (11) définissent un motif de chemin conducteur (13) en forme de peigne, en forme de grille, en forme de grille croisée, en forme de méandre ou en forme de zigzag, ou
- **en ce que** un ou plusieurs chemins conducteurs (12) présentent une section transversale (15) qui est orientée transversalement par rapport à leur direction principale d'extension respective et est sensiblement rectangulaire ou polygonale et de surface constante ou variable le long de sa direction principale d'extension respective, la section transversale (15) étant plus large en surface en particulier dans la région d'un connecteur femelle (16) de l'élément chauffant (1) que dans la région d'une extrémité libre (17) de l'élément chauffant (1) agencée à une certaine distance du connecteur femelle (16), ou
- **en ce que** le motif du chemin conducteur respectif (13) forme 0,1 % à 50 %, de préférence 1 % à 35 %, de la surface des grandes zones de corps fonctionnel (7, 8), afin, en particulier, de fournir un motif de chemin conducteur relativement étroitement ou relativement largement maillé (13).

6. Élément chauffant (1) selon l'une des revendications 1 à 5,
**caractérisé**
- **en ce que** les parties de structure de liaison (10) sont agencées sur les parties de structure conductrice (9) avec un effet de liaison de matériau et/ou d'ajustement forcé et/ou de complémentarité de forme, ou
- **en ce que** la grande zone de chauffage (3, 4) s'étendant contre une grande zone de corps fonctionnel (7) est reliée par liaison par les parties de structure de liaison (10) à plus de 50 % à 99,9 %, de préférence 65 % à 99 %, de sa surface, et un corps isolant (5) est relié de cette manière sur 50 % à 100 % de sa surface.

7. Élément chauffant (1) selon l'une des revendications 1 à 6,
**caractérisé**
- **en ce que** les parties de structure de liaison (10) forment 50 % à 99,9 %, de préférence 65 % à 99 %, du volume d'un corps fonctionnel (6), et/ou
- **en ce que** les parties de structure de liaison (10) forment 50 % à 99,9 %, de préférence 65 % à 99 %, de la surface de la grande zone de corps fonctionnel (7) du côté corps chauffant et/ou de la surface de la grande zone de corps fonctionnel (8) du côté corps isolant.

8. Élément chauffant (1) selon l'une des revendications 1 à 7,
**caractérisé**
- **en ce que** les parties de structure de liaison (10) sont formées par un ensemble chemin de liaison (18) comprenant au moins un chemin de liaison (19) présentant un effet de liaison pour assurer une fonction de liaison, l'ensemble chemin de liaison (18) comprenant un certain nombre de chemins de liaison (19) qui sont séparés les uns des autres, ou
- **en ce que** l'ensemble chemin de liaison (18) comprend un certain nombre de chemins de liaison (19) reliés les uns aux autres par un effet de liaison de matériau.

9. Élément chauffant (1) selon la revendication 8,
**caractérisé**
- **en ce que** les chemins de liaison (19) d'un ensemble chemin de liaison (18) définissent un motif de chemin de liaison en forme de peigne, en forme de grille, en forme de grille croisée, en forme de méandre ou en forme de zigzag (20), et/ou
- **en ce que** le motif de chemin de liaison respectif (20) forme 50 % à 99,9 %, de préférence 65 % à 99 %, de la surface des grandes zones de corps fonctionnel (7, 8), afin, en particulier, de fournir un motif de chemin de liaison relativement serré ou relativement large (20), et/ou
- **en ce que** le motif de chemin de liaison (20) est formé en complément et en supplément du motif de chemin conducteur (13).

10. Élément chauffant (1) selon l'une des revendications précédentes,
**caractérisé**
**en ce que** le corps chauffant (2) présente un plan miroir imaginaire ou une ligne miroir imaginaire, par rapport auquel les deux corps fonctionnels (6), en particulier leurs parties de structure conductrice (9) et leurs parties de structure de liaison (10), sont formés de manière spéculaire ou de manière spéculaire linéaire, afin de fournir un agencement miroir diagonal par rapport au plan miroir imaginaire ou par rapport à la ligne miroir imaginaire, afin, en particulier, de compenser un effet de force du corps chauffant (2) traversé par un courant.

11. Élément chauffant (1) selon l'une des revendications précédentes,
**caractérisé**
- **en ce que** une couche intermédiaire (23), qui est, de préférence, produite à partir d'un matériau en argent ou d'un alliage d'argent et est électroconductrice, est agencée entre une ou la totalité des grandes zones de chauffage (3, 4) et une ou la totalité des grandes zones de corps fonctionnel (7, 8), ou
- **en ce qu'**au moins un corps isolant (5) et/ou le corps chauffant (2) présentent au moins un évidement ouvert (24), dans lequel un corps fonctionnel (6) est agencé, en particulier des parties de structure conductrice (9) selon les revendications 1 à 5.

12. Ensemble chauffant, en particulier ensemble chauffant PTC, pour chauffer un fluide,
- avec au moins un élément chauffant (1) selon l'une des revendications 1 à 11,
- avec au moins une carte de circuit imprimé conçue pour recevoir et fournir de l'énergie à des éléments chauffants (1), en particulier une PCB,
- au moins un élément chauffant (1) qui est agencé de manière fonctionnelle sur la carte de circuit imprimé.

13. Véhicule à moteur, en particulier véhicule routier à moteur à entraînement électrique, de préférence véhicule routier à moteur hybride,
- avec un dispositif de climatisation, permettant de régler convenablement, à l'intérieur de véhicule à moteur du véhicule à moteur, une température de l'air qui est prescrite, ou peut être prescrite, par un utilisateur,
- avec au moins un élément chauffant (1) selon l'une des revendications 1 à 11 et/ou un ensemble chauffant selon la revendication 12 agencé dans le dispositif de climatisation.
